# EUROPÄISCHE PATENTSCHRIFT

(11) **EP 0 586 861 B1**
(45) Veröffentlichungstag und Bekanntmachung des Hinweises auf die Patenterteilung: **20.03.1996**
(21) Anmeldenummer: 93112109.9
(22) Anmeldetag: 29.07.1993
(51) Int. Cl.: F03B 11/06, F16C 17/06

(54) **Kombiniertes Trag- und Führungslager einer vertikalachsigen Wasserkraftmaschine**
Combined thrust and support bearing for hydroelectric machine with vertical axis
Palier combinée radial-axial pour machine hydroélectrique à axe vertical

(30) Priorität: 05.09.1992 DE 4229772
(43) Veröffentlichungstag der Anmeldung: 16.03.1994
(73) Patentinhaber: ASEA BROWN BOVERI AG, CH-5401 Baden (CH)
(72) Erfinder: Schwanda, Josef, CH-5242 Lupfig (CH)
(74) Vertreter: Hetzer, Hans Jürgen

(56) Entgegenhaltungen:
- WO-A-91/05961
- CH-A- 331 319
- GB-A- 762 245
- US-A- 3 018 144
- PATENT ABSTRACTS OF JAPAN vol. 008, no. 262 (M-341)30. November 1984 & JP-59 133 820 (HITACHI SEISAKUSHO KK) 1. August 1984
- PATENT ABSTRACTS OF JAPAN vol. 006, no. 020 (M-110)5. Februar 1982 & JP-A-56 138 516 (HITACHI LTD) 29. Oktober 1981
- PATENT ABSTRACTS OF JAPAN vol. 10, no. 113 (E-399)26. April 1986 & JP-A-60 249 844 (FUJI DENKI SEIZO) 10. Dezember 1985

## Beschreibung

### TECHNISCHES GEBIET

Die Erfindung bezieht sich auf ein kombiniertes Trag- und Führungslager einer vertikalachsigen Wasserkraftmaschine, mit einer in einem Lagertragstern gelagerten einen Wellen-Kupplungsflansch aufweisenden Welle, die mit einem Tragkopf versehen ist, der Laufflächen und/oder Laufringe für ein Führungslager und ein Traglager aufweist, wobei sich die Segmente des Traglagers über Einstellelemente auf einem fest mit dem Lagertragstern verbundenem Tragring abstützen.

### TECHNOLOGISCHER HINTERGRUND UND STAND DER TECHNIK

Elektrische Maschinen mit vertikaler Welle und grösserer Leistung werden alle mit Segmentlagern ausgerüstet. Das Lager ist bei grossen Maschinendurchmesser unterhalb des Rotors angeordnet und ist dort auf einem Lagertragstern abgestützt. Der Innendurchmesser des Lagertragsterns ist dabei so gewählt, dass der Wellen-Kupplungsflansch zur Turbine durch diesen hindurchgeht, soll der Rotor ausbaubar sein. Dies bedingt normalerweise auch einen grösseren Lagerdurchmesser. Wegen der Lagerverluste und auch aus Kostengründen ist jedoch ein möglichst kleiner Lagerdurchmesser anzustreben.

Ausgangspunkt für die vorliegende Erfindung ist ein kombiniertes Trag- und Führungslager für eine vertikale Wasserkraftmaschine, wie es aus der US-Patentschrift 3,018,144 bekannt ist. Bei dieser bekannten Maschine ist auf der Welle ein mit dieser einstückig ausgebildeter Tragkopf angeordnet. Der Tragkopf weist Laufflächen bzw. Laufringe für das Führungslager und das Traglager auf.

Die Segmente des Traglagers stützen sich über Einstellelemente auf einem geschlossenen Lagertragring ab, der seinerseits auf einem Tragring des Lagertragsterns befestigt ist. Um einerseits das Herausfahren des Rotors nach oben zu ermöglichen, andererseits den Lagerdurchmesser klein zu halten, liegt der Lagertragring nur mit etwa der Hälfte seines Ringdurchmessers auf dem besagten Tragring des Lagertragsterns auf und ist aus diesem Grunde sehr gross dimensioniert. Der Lagertragring ist aus Montagegründen mehrteilig.

### KURZE DARSTELLUNG DER ERFINDUNG

Ausgehend vom Stand der Technik liegt der Erfindung die Aufgabe zugrunde, ein kombiniertes Trag- und Führungslager zu schaffen, das ohne Stabilitätseinbusse einfacher und wirtschaftlicher zu fertigen ist.

Diese Aufgabe wird erfindungsgemäss dadurch gelöst, dass jedes Traglagersegment je über einen einzigen Segmentträger auf dem Tragring des Lagertragsterns abgestützt ist, und dass die Segmentträger mit dem besagten Tragring verschraubt sind, wobei der Innendurchmesser des Tragrings grösser ist als der Aussendurchmesser des Wellen-Kupplungsflansches.

Die Segmentträger weisen in etwa T-förmigen Querschnitt auf, wobei der radial weisende Mittelschenkel vollständig auf dem Tragring aufliegt und dort mit diesem verschraubt ist. Die beiden anderen axial verlaufenden Schenkel weisen eine durchgehende, parallel zur Wellenachse verlaufende Durchgangsbohrung auf, die teilweise mit einem Innengewinde versehen ist. Diese Bohrung nimmt die Einstellspindel für die Traglagersegmente auf.

Gegenüber den bekannten Lageranordnungen weist die Erfindung insbesondere den Vorteil einfacher Herstellung und Montage auf. Der bei der Lösung nach der US-PS 3,018,144 vorhandene massive Lagertragring entfällt. Die Segmentträger weisen nur vergleichweise wenig zu bearbeitende Flächen auf und können aus dicken Stahlplatten durch Brennschneiden herausgebrannt werden.

Um den Rotor herauszufahren, muss dieser zunächst nur wenig angehoben werden, um die Segmentträger nach unten entfernen zu können. Dann kann der Rotor vollständig entfernt werden.

### KURZE BESCHREIBUNG DER ZEICHNUNGEN

In der Zeichnung ist in schematischer Darstellung ein Ausführungsbeispiel der Erfindung dargestellt, und zwar zeigt:
- Fig.1: einen vereinfachten Längsschnitt durch das kombinierte Trag- und Führungslager einer vertikalachsigen Wasserkraftmaschine;
- Fig.2: einen Querschnitt durch das Lager gemäss Fig.1 längs deren Linie AA.

### WEGE ZUR AUSFÜHRUNG DER ERFINDUNG

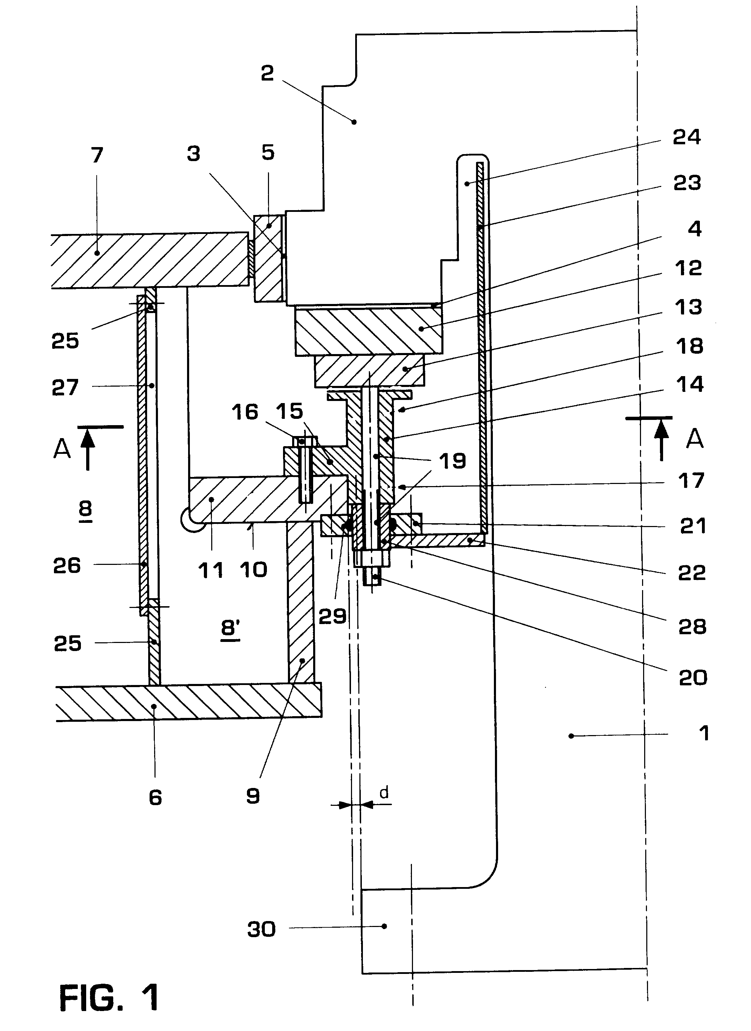

In Fig.1 der Zeichnung ist eine Welle 1 einer vertikalachsigen Wasserkraftmaschine mit einem Tragkopf 2 einstückig ausgebildet. Der Tragkopf 2 weist am Aussenumfang eine Lauffläche 3 des Führungslagers und stirnseitig eine Lauffläche 4 des Traglagers auf. Das Führungslagersegment 5 des Führungslagers stützt sich ab am Innenumfang des Lagertragsterns, von dem in Fig.1 nur der untere und obere Ring 6, 7 sowie eine die beiden Ringe 6 und 7 verbindende radiale Rippe 8 sichtbar sind.

Die Rippen 8 sind am radial innenliegenden Ende mit einer Ausnehmung versehen. Ein Ring 9 ist rundum mit dem vorkragenden Ende 8' aller Rippen 8 und dem unteren Ring 6 des Lagertragsterns verschweisst. Auf die radial verlaufenden Kanten 10 der vorkragenden Enden 8'der Rippen 8 ist ein Tragring 11 aufgelegt und mit diesen verschweisst.

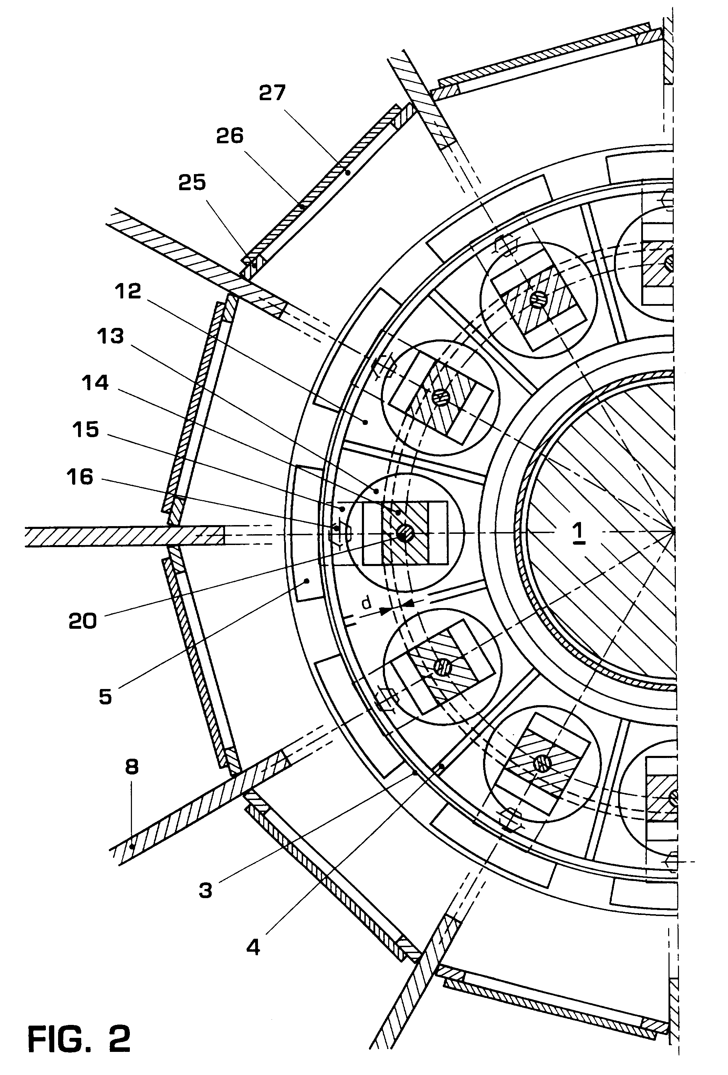

Die Traglagersegmente 12, deren Form und Verteilung aus Fig.2 hervorgeht, liegen je auf einem Segmentteller 13 auf, der seinerseits je auf einer Einstellspindel 20 in einem Segmentträger 14 ruht. Dieser Segmentträger 14 weist in etwa T-förmigen Querschnitt auf, wobei sein radial nach aussen weisender Mittelschenkel 15 vollständig auf dem Tragring 11 aufliegt und dort mit diesem mittels Schrauben 16 befestigt ist. Die beiden anderen axial verlaufenden Schenkel 17, 18 weisen eine durchgehende, parallel zur Wellenachse verlaufende Durchgangsbohrung auf 19, die ganz oder teilweise mit einem Innengewinde versehen ist. Diese Bohrung nimmt die Einstellspindel 20 für die Traglagersegmente 12 auf.

Die Segmentträger 14 sind vorzugsweise einstückig ausgeführt und werden vorzugsweise aus dicken Stahlplatten herausgebrannt Sie können aber auch gegossen oder geschmiedet sein. Ihre Dicke in Umfangsrichtung gesehen beträgt etwa 1/3 bis 1/4 der Breite der Traglagersegmente 12. Sie müssen nur vergleichsweise wenig bearbeitet werden, und zwar - abgesehen von der Befestigungsbohrung für die Schraube 16, die Durchgangsbohrung 19 und den Zapfen 28 - im wesentlichen nur an der Auflagefläche am Tragring 11 und möglicherweise an derjenigen für den Segmentteller 13.

Trag- und Führungslager sind in bekannter Weise gegenüber der Welle 1, nach unten und gegen den Lagertragstern abgeschlossen. So erfolgt die Abdichtung nach unten durch einen (aus Montagegründen) zwei- oder mehrteiligen Dichtring 21, der radial aussen mit dem Tragring 11 verschraubt ist. Radial innen ist an den Dichtring 21 ein zwei- oder mehrteiliger Deckel 22 angeschraubt, der sich nach oben hin in einem längsgeteilten, die Welle umfassenden Rohr 23 fortsetzt. Dieses Rohr 23 endet in einer tiefen Eindrehung 24 im Tragkopf 2, welche Eindrehung und auch das Rohr 23 in Achsrichtung bis über die Lauffläche 3 des Führungslagers reicht.

Die Abdichtung gegen den Lagertragstern hin erfolgt durch eine Trennwand 25. Diese ist mit den beiden Ringen 6 und 7 und mit den Rippen 8 verschweisst. Die Trennwand 25 weist eine durch einen Montagedeckel 26 verschliessbare Montageöffnung 27 auf.

Damit die Einstellspindeln 20 von aussen unten zugänglich sind, ist das freie Ende des unteren Schenkels 17 als Zapfen 28 ausgebildet, der durch entsprechende Bohrungen im Dichtring 21 hindurchreicht und dort mittels Dichtungen 29 abgedichtet ist.

Durch die soeben beschriebenen Elemente ist ein Oelbehälter gebildet, der mit schmieröl gefüllt ist. Aus Gründen der Uebersichtlichkeit und auch deshalb, weil sie nicht zum unmittelbaren Verständnis der Erfindung beitragen, sind in der Zeichnung Einzelheiten, welche die Halterung der Lagersegmente bzw. Segmentteller, die Schmierölversorgung der Lager und die Mittel zur Schmierölkühlung betreffen, fortgelassen worden.

Zum Ausbauen des Rotors der Wasserkraftmaschine wird die Verbindung zwischen dem Wellen-Kupplungsflansch 30 und der (nicht eingezeichneten) Turbine gelöst. Dann wird der Rotor ein wenig angehoben, um die Segmentträger 14 zu entlasten. Durch die Montageöffnung 27 in der Trennwand 25 können nun die Schrauben 16 gelöst und entfernt werden. Nach dem Ausbau der Teile 21, 22 und 23 lassen sich die Segmentträger 14 nach unten entfernen. Weil nun der Innendurchmesser des Tragrings 11 grösser ist als der Aussendurchmesser des Wellen-Kupplungsflanschs 30, verbleibt beim endgültigen Herausheben des Rotors rundum ein Spalt d zwischen dem Wellen-Kupplungsflansch 30 und dem Tragring 11. Der Innendurchmesser des Lagertragsterns im Bereich des Führungslagers 4 ist ohnehin regelmässig grösser als der Aussendurchmesser des Wellen-Kupplungsflanschs 30.

### BEZEICHNUNGSLISTE

- 1: Welle
- 2: Tragkopf
- 3: Lauffläche des Führungslagers
- 4: Lauffläche des Traglagers
- 5: Führungslagersegmente
- 6: unterer Ring des Lagertragsterns
- 7: oberer Ring des Lagertragsterns
- 8: radiale Rippen
- 8': vorkragende Enden von 8
- 9: Ring
- 10: radial verlaufende Kante von 8'
- 11: Tragring
- 12: Traglagersegmente
- 13: Segmentteller
- 14: Segmentträger
- 15: Mittelschenkel von 14
- 16: Schrauben
- 17,18: axial verlaufende Schenkel von 14
- 19: axiale Bohrung in 17 und 18
- 20: Einstellspindel
- 21: Dichtring
- 22: Deckel
- 23: Rohr
- 24: Eindrehung in 2
- 25: Trennwand
- 26: Montagedeckel
- 27: Montageöffnung in 25
- 28: Zapfen an 17
- 29: Dichtung
- 30: Wellen-Kupplungsflansch

## Patentansprüche

1. Kombiniertes Trag- und Führungslager einer vertikalachsigen Wasserkraftmaschine, mit einer in einem Lagertragstern (6,7) gelagerten einen Wellen-Kupplungsflansch (30) aufweisenden Welle (1), die mit einem Tragkopf (2) versehen ist, der Laufflächen (3,4) und/oder Laufringe für ein Führungslager und ein Traglager aufweist, wobei sich die Segmente (12) des Traglagers über Einstellelemente (20) auf einem fest mit dem Lagertragstern (6,7) verbundenem Tragring (11) abstützen, dadurch gekennzeichnet, dass jedes Traglagersegment (12) je über einen einzigen Segmentträger (14) auf dem Tragring (11) des Lagertragsterns abgestützt ist, dass die Segmentträger (14) mit dem besagten Tragring (11) verschraubt sind, und dass der Innendurchmesser des Tragrings (11) grösser ist als der Aussendurchmesser des Wellen-Kupplungsflansches (30).

2. Lager nach Anspruch 1, dadurch gekennzeichnet, dass die Segmentträger (14) T-förmiges Profil aufweisen, wobei der radial nach aussen weisende Mittelschenkel (15) des Segmentträgers (14) vollständig auf dem Tragring (11) aufliegt und dort mit diesem lösbar verbunden ist.

3. Lager nach Anspruch 2, dadurch gekennzeichnet, dass die beiden anderen axial verlaufenden Schenkel (17,18) eine durchgehende, parallel zur Wellenachse verlaufende Durchgangsbohrung (19) aufweisen, die ganz oder teilweise mit einem Innengewinde zur Aufnahme einer Einstellspindel (20) für die Traglagersegmente(12) versehen ist.

4. Lager nach Anspruch 2 oder 3, dadurch gekennzeichnet, dass der nach unten weisende freie Schenkel (17) des Segmentträgers (14) mit einem Zapfen (28) versehen ist, welcher Zapfen flüssigkeitsdicht durch einen Dichtring (21) geführt ist.

## Claims

1. Combined supporting and guide bearing of a vertical-axis hydroelectric machine, having a shaft (1) which is mounted in a bearing-supporting star (6, 7), has a shaft coupling flange (30) and is provided with a supporting head (2) which has running surfaces (3, 4) and/or track rings for a guide bearing and a supporting bearing, the segments (12) of the supporting bearing being supported via adjusting elements (20) on a supporting ring (11) firmly connected to the bearing-supporting star (6, 7), characterized in that each supporting-bearing segment (12) is supported via a single segment support (14) on the supporting ring (11) of the bearing-supporting star, in that the segment supports (14) are screwed to the said supporting ring (11), and in that the inside diameter of the supporting ring (11) is greater than the outside diameter of the shaft coupling flange (30).

2. Bearing according to Claim 1, characterized in that the segment supports (14) have a T-shaped profile, the centre leg (15), pointing radially outwards, of the segment support (14) resting completely on the supporting ring (11) and being detachably connected there to the latter.

3. Bearing according to Claim 2, characterized in that the other two axially running legs (17, 18) have a continuous through-bore (19) which runs parallel to the shaft axis and is entirely or partly provided with an internal thread for accommodating an adjusting spindle (20) for the supporting-bearing segments (12).

4. Bearing according to Claim 2 or 3, characterized in that the free leg (17), pointing downwards, of the segment support (14) is provided with a journal (28), which journal is guided in a liquid-tight manner through a sealing ring (21).

## Revendications

1. Palier combiné radial-axial pour une machine hydroélectrique à axe vertical, avec un arbre (1) posé dans une étoile de support de palier (6, 7) et présentant une bride d'accouplement de l'arbre (30), qui est pourvu d'une tête de support (2), qui présente des surfaces de glissement (3, 4) et/ou des bagues de glissement pour un palier axial et un palier radial, les patins (12) du palier radial prenant appui par des éléments de réglage (20) sur une bague de support (11) fermement assemblée à l'étoile de support de palier (6, 7), caractérisé en ce que chaque patin de palier radial (12) prend appui séparément sur la bague de support (11) de l'étoile de support de palier par un seul support de patin (14), en ce que les supports de patin (14) sont boulonnés à ladite bague de support (11), et en ce que le diamètre intérieur de la bague de support (11) est plus grand que le diamètre extérieur de la bride d'accouplement de l'arbre (30).

2. Palier suivant la revendication 1, caractérisé en ce que les supports de patin (14) présentent un profil en T, dans lequel la branche médiane (15) du support de patin (14) orientée radialement vers l'extérieur repose entièrement sur la bague de support (11) et y est fixée à celle-ci de manière démontable.

3. Palier suivant la revendication 2, caractérisé en ce que les deux autres branches orientées axialement (17, 18) présentent un trou de passage traversant (19), orienté parallèlement à l'axe de l'arbre, qui est entièrement ou en partie pourvu d'un filetage intérieur destiné à recevoir une broche de réglage (20) pour les patins de palier radial (12).

4. Palier suivant la revendication 2 ou 3, caractérisé en ce que la branche libre orientée vers le bas (17) du support de patin (14) est pourvue d'un tourillon (28), qui est mené de façon étanche aux liquides à travers une bague d'étanchéité (21).
